Europäisches Patentamt

**European Patent Office**

**Office européen des brevets**

(11) Publication number : **0 002 292**
**B1**

(12) **EUROPEAN PATENT SPECIFICATION**

(45) Date of publication of patent specification :
11.02.81

(51) Int. Cl.³ : **F 16 C 33/14**, F 16 C 33/10

(21) Application number : 78200305.7

(22) Date of filing : 14.11.78

(54) Method of and device for manufacturing a hydrodynamic groove bearing.

(30) Priority : 30.11.77 NL 7713195

(43) Date of publication of application :
13.06.79 (Bulletin 79/12)

(45) Publication of the grant of the patent :
11.02.81 Bulletin 81/06

(84) Designated contracting states :
DE FR GB NL SE

(56) References cited :
FR - A - 1 222 347
FR - A - 1 368 114
FR - A - 1 594 523
NL - A - 267 647
US - A - 3 833 981

(73) Proprietor : **N.V. Philips' Gloeilampenfabrieken**
**Pieter Zeemanstraat 6**
**NL-5621 CT Eindhoven (NL)**

(72) Inventor : **Remmers, Gerrit**
**c/o INT. OCTROOIBUREAU B.V. 6, Prof. Holstlaan**
**NL-5600 Eindhoven (NL)**
Inventor : **Vandersteen, Jacobus Johannes Cornelis**
**c/o INT. OCTROOIBUREAU B.V. 6, Prof. Holstlaan**
**NL-5600 Eindhoven (NL)**

(74) Representative : **Melio, Jan Dirk et al**
**INTERNATIONAAL OCTROOIBUREAU B.V. Prof. Holstlaan 6**
**NL-5600 Eindhoven (NL)**

Imprimerie Jouve, 17, rue du Louvre, 75001 Paris, France

" Method of and device for manufacturing a hydrodynamic groove bearing ".

The invention relates to a method of manufacturing a hydrodynamic groove bearing which comprises a shaft and a bush, at least one of the cooperating surfaces of which is provided with at least one pattern of shallow lubricant-pumping grooves.

A hydrodynamic groove bearing of the kind forming the subject of the present invention is described, for example, in British Patent Specification 1,002,391 and British Patent Specification 1,163,018. The forming of the grooves presents a major problem in the bulk manufacture of this kind of bearing.

Know methods in this respect consist of cutting of the grooves by means of a tool on a lathe ; this method is too expensive for bulk manufacture. It is also known to cut the grooves by means of a special cutting tool, but this method requires expensive centring facilities in order to achieve the desired accuracy of the groove depth. Finally, it has also been proposed to form the grooves by, for example, an electro-chemical process.

FR-A-1 222 347 discloses an apparatus for forming a helical groove in the inner surface of a cylindrical tube. This known apparatus includes an annular rotatable head which carries a ball in a hole formed in the head and supported by a member located within the head. The tube is moved longitudinally over the head while the head together with the ball is rotated so that the ball is pressed into the tube to form a helical groove. In this apparatus the ball rests on a relatively non-moving support so that a rolling motion of the ball is practically impossible or accompanied with a great deal of wear of support, head and balls. This implies that the relative movement between tube and ball will be mainly a non-rolling movement. In fact the ball plows through the material of the tube which on the one hand necessitates great forces and on the other hand provides grooves, which are not very accurate and which are not reproducible.

The invention has for its object to provide a method and a device whereby bearings of the described kind can be manufactured in a fast, accurate and reproducible manner.

The method in accordance with the invention is characterized in that the bearing bush is positioned concentrically around a pin of harder material than the bush or the bearing shaft is positioned concentrically within a sleeve of harder material than the shaft and in an annular gap between the pin or sleeve and the bearing bush or bearing shaft respectively there is arranged a cage comprising at least one ring of holes which are symmetrically distributed around the centre line and in which balls are accommodated which have a diameter which is larger than the width of the annular gap, after which relative simultaneous axial and rotational movement between the pin or bearing shaft and the cage, between the cage and the bearing bush or sleeve and between the pin or bearing shaft and the bearing bush or sleeve are effected at relative speeds such that the balls undergo a rolling motion between the pin or the sleeve and the bearing bush or the bearing shaft respectively. Because the diameter of the balls is slightly larger than the gap between the pin and the bearing bush or between the bearing shaft and the sleeve the balls are pressed into the material of the bearing bush or the bearing shaft, so that helical grooves having somewhat proud edges are obtained by the combined axial and rotational movements. The proud edges can be removed at a later stage by a chipping operation, for example, by means of a broach, or may be smoothed by a non-chipping operation. In given circumstances, it is even possible to omit the finishing operation completely. The grooves obtained have a very accurate groove depth. The described method is very suitable for bulk manufacture.

A further preferred embodiment of the method in accordance with the invention, in which the cage follows the balls exactly, is characterized in that the rotary speeds of the pin or the bearing shaft, the sleeve or the bearing bush and the cage satisfy :

$$W_k = \frac{W_p(R - 2r) + W_b R}{2(R - r)}$$

the axial speeds of the cage, the pin or the bearing shaft and the sleeve or the bearing bush satisfying :

$$V_k = 1/2(V_p + V_b)$$

in which :
$W_k$ = angular speed of the cage
$W_p$ = angular speed of the pin or bearing shaft
$W_b$ = angular speed of the sleeve or bearing bush
$R$ = inner radius of the sleeve or bearing bush
$r$ = radius of the balls
$V_k$ = axial speed of the cage
$V_p$ = axial speed of the pin or bearing shaft
$V_b$ = axial speed of the sleeve or bearing bush.

Exact rolling of the balls and exact following of the cage are thus ensured. The desired pitch of the grooves is obtained by selection of the axial speed of the cage. In order to obtain a herringbone groove pattern in the bearing bush or bearing shaft, the directions of the relative rotational movements between the pin or bearing shaft and the cage, between the cage and bearing bush or sleeve, and between the pin or bearing shaft and the bearing bush or sleeve are reversed in accordance with the invention after displacement of the pin or sleeve and the cage or bearing bush or shaft over given distances in the axial direction.

In order to obtain grooves having a varying depth, the diameter of the pin or the sleeve is varied in a further embodiment. The variation may be continuous or at intervals, parts of constant groove depth being situated therebetween.

If the forces on the balls become too large in the case of a rather large groove depth, the desired depth can be obtained in stages. In order to carry out these stages as quickly and simply as possible, a further preferred embodiment is characterized in that the cage is provided with a plurality of rings of holes, the balls in each ring again having a slightly larger diameter than the balls in the preceding ring with respect to the relative movement between the balls and the bearing bush or shaft in the axial direction or having the same diameter but cooperating with pin or sleeve portions of larger of smaller diameter, respectively. In given circumstances, notably when a bearing bush or bearing shaft of small diameter is to be provided with a groove pattern, the diameter of the cage is too small to accommodate an adequate number of holes with balls in one ring. In accordance with the invention, it is then possible to provide the cage with two or more rings of holes accommodating balls of the same diameter, the holes in the various rings being staggered in the circumferential direction with respect to each other. A bearing shaft or bearing bush of small diameter can thus be provided with a large number of helical, shallow grooves.

The invention furthermore relates to a device for performing the described method. The invention will be described in detail hereinafter with reference to the accompanying diagrammatic drawings.

Fig. 1 diagrammatically shows (not to scale) a device for forming a groove pattern in a bearing bush.

Fig. 2 diagrammatically shows (not to scale) a device for forming a groove pattern on a bearing shaft.

Figs. 3 and 4 diagrammatically show (not to scale) devices for forming groove patterns on a bearing shaft in two successive stages.

Fig. 5 diagrammatically shows a device whereby a herring-bone groove pattern can be formed on a bearing shaft in a number of stages.

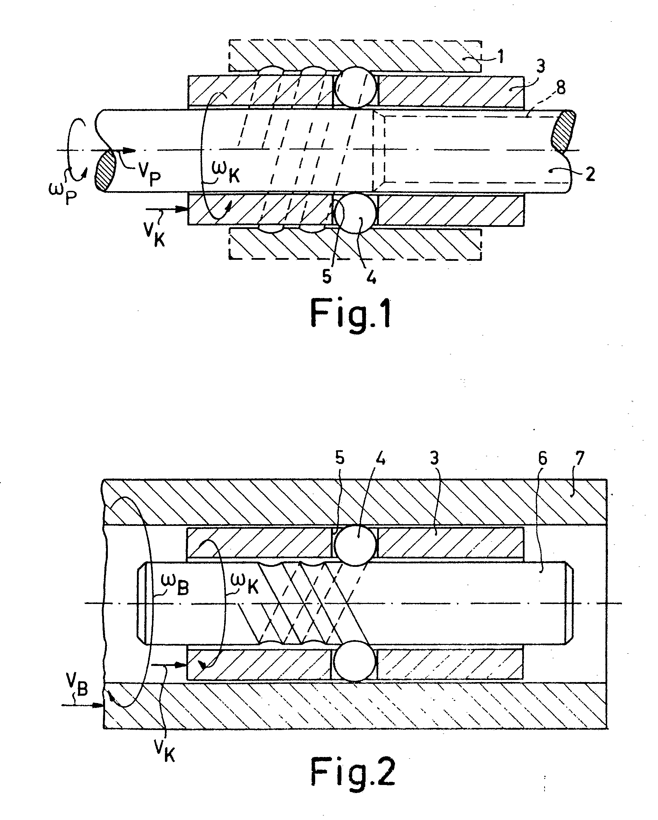

The reference numeral 1 in Fig. 1 denotes a bearing bush whose inner surface is to be provided with a groove pattern. This bearing bush 1 is rigidly supported by means which are not shown. In the bearing bush there is situated an assembly formed by a hard pin 2, a cage 3 and balls 4. The balls 4 are accommodated in a ring of holes 5 in the cage 3 which are symmetrically arranged around the centre line of the cage. The balls 4 have a diameter which is larger than the gap between the pin 2 and the inner side of the bearing bush 1 by an amount such that the desired groove depth is obtained. The pin 2 and the cage 3 are each coupled to a known drive (not shown) which is capable of imparting a translatory and a rotary movement to the pin as well as the cage. The assembly formed by the pin, the cage and the balls is then moved through the bearing bush in an axial and rotary manner, the balls bearing against the pin and impressing grooves in the softer material of the bearing bush. The balls 4 perform a pure rolling motion on the bearing surface when the rotary and axial speeds of the pin, the cage and the bearing bush satisfy :

$$W_k = \frac{W_p(R - 2r) + W_b R}{2(R - r)}$$

and

$$V_k = 1/2(V_p + V_b)$$

in which
$W_k$ = angular speed of the cage
$W_p$ = angular speed of the pin
$W_b$ = angular speed of the bearing bush
$R$  = inner radius of the bearing bush
$r$  = radius of the balls
$V_k$ = axial speed of the cage
$V_p$ = axial speed of the pin
$V_b$ = axial speed of the bush.

The number of helical grooves thus obtained corresponds to the number of balls used. The pitch of these grooves depends on the ratio of the axial speed and the rotary speed of the cage.

Therefore, grooves of varying pitch can be obtained by variation of this ratio. If a herring-bone pattern is required, the direction of rotation of the pin 2 as well as the cage 3 should be reversed after completion of a given movement in the axial direction.

In order to obtain grooves of varying depth, it is possible, as denoted in Fig. 1 by a broken line 8, to give the pin a varying diameter, so that during the period when the balls cooperate with the part 8, the grooves are made shallower than during cooperation with the other part of the pin. Even though the pin 2 moves in Fig. 1 whilst the bearing bush 1 is stationary, it is alternatively possible to maintain the pin 2 stationary and to impart a combined rotary and translatory movement to the bearing bush 1. It is essential that there exists a relative simultaneous axial and rotational movement between the pin and the cage and between the pin and the bearing bush, whereby the speeds satisfy the above formulae, only in this way a pure rolling motion of the balls is obtained.

In given circumstances, the speeds may deviate slightly from the values deduced from the formulae. In such a case, the balls no longer perform a pure rolling motion but exhibit some slippage which is acceptable.

In given circumstances, structural conditions will make it impossible to accommodate as many balls in a ring of holes as the number of grooves required. In such a case a solution is found by providing two or more rings of holes and accommodating the desired number of balls therein. However, the holes in the adjacent rings must then be staggered with respect to each other.

Fig. 2 shows how grooves can also be provided on the shaft or a bearing by using the same principle. The only difference consists in that the bearing shaft should have a hardness which is less than that of the sleeve 7 on which the balls 4 bear. The foregoing statements as regards the ratio of the speeds and the variation of the groove depth and pitch are also applicable in this case. It will be obvious that the material forced aside by the balls forms proud edges along the grooves. These proud edges may be removed by means of a deburring operation, for example, on a lathe. In the case of a bearing bush, the proud groove edge can also be removed by means of a broach.

In given circumstances, the height of the proud edges is so small or the shape is such that finishing can be completely omitted.

Instead of being removed by a chipping operation, the groove edges can alternatively be pressed down.

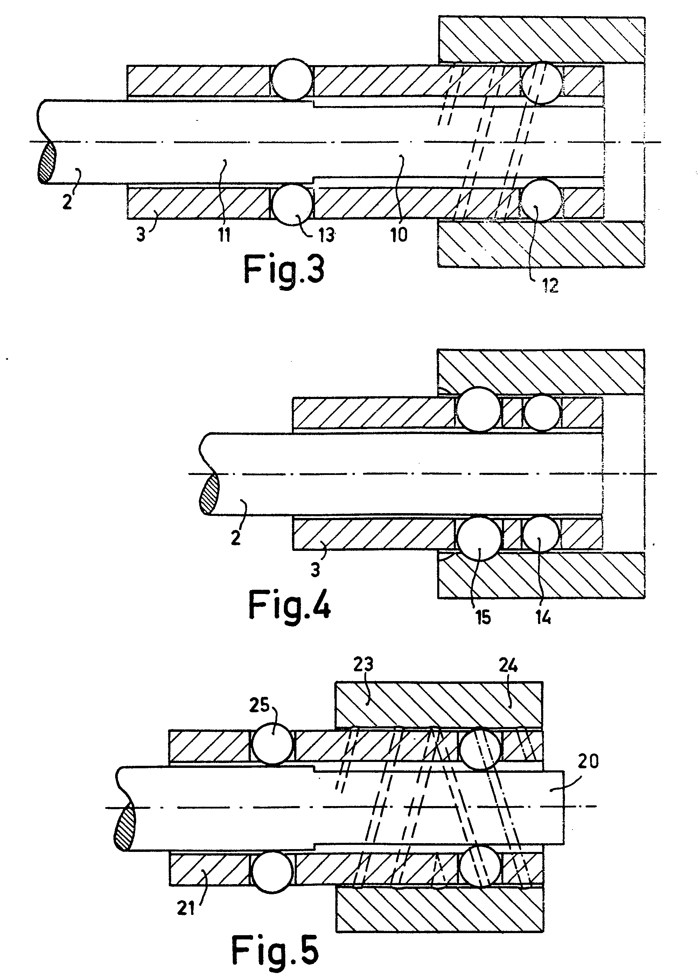

Fig. 3 diagrammatically shows how the desired depth can be imparted to the grooves, in stages. The hard pin 2 comprises two parts 10 and 11 of slightly different diameter. The cage 3 is provided with two rings of balls 12 and 13 which are separated by a distance which corresponds to an integral number of times the pitch, divided by the number of balls in each ring. First of all, the part accommodating the balls 12 is passed through the bearing bush, grooves of limited depth thus being obtained. Subsequently, the part comprising the balls 13 is passed through the bush, so that the grooves already formed become deeper.

Another possibility of imparting the desired depth to the grooves in stages is diagrammatically shown in Fig. 4. The cage again comprises two rings of balls 14 and 15, but the pin 2 has the same diameter throughout, and the balls 15 have a slightly larger diameter than the balls 14.

When a bearing is to be provided with a herring-bone pattern by means of the devices shown in the Figs. 3 and 4, the two ball rings 12, 13 and 14, 15 should be situated at an axial distance from each other which corresponds to at least the length of the bearing, it furthermore being necessary for said distance to amount to an integral number of times the pitch, divided by twice the number of balls per ring (see Fig. 5). The pin 20 and the cage 21 rotate in the one direction during the passage of the balls 2 through the region 23, and in the opposite direction during the passage of the balls through the region 24. When the ring 25 reaches the bearing bush, the pin 20 rotates again in the former direction, and the direction of rotation is reversed again when the region 24 is reached.

## Claims

1. A method of manufacturing a hydrodynamic grooved bearing which comprises a shaft and a bush, at least one of the cooperating surfaces of which is provided with at least one pattern of shallow lubricant-pumping grooves, characterized in that the bearing bush is positioned concentrically around a pin of harder material than the bush or the bearing shaft is positioned concentrically within a sleeve of harder material than the shaft and in an annular gap between the pin or sleeve and the bearing bush or bearing shaft respectively there is arranged a cage comprising at least one ring of holes which are symmetrically distributed around the centre line and in which balls are accommodated which have a diameter which is larger than the width of the annular gap, after which relative simultaneous axial and rotational movements between the pin or bearing shaft and the cage, between the cage and the bearing bush or sleeve and between the pin or bearing shaft and the bearing bush or sleeve are effected at relative speeds such that the balls undergo a rolling motion between the pin or the sleeve and the bearing bush or the bearing shaft respectively.

2. A method as claimed in Claim 1, characterized in that the rotary speeds of the pin or the bearing shaft, the sleeve or the bearing bush and the cage satisfy :

$$W_k = \frac{W_p(R - 2\,r) + W_b\,R}{2(R - r)}$$

the axial speeds of the cage, the pin or the bearing shaft and the sleeve or the bearing bush satisfying :

$$V_k = 1/2(V_p + V_b)$$

in which :
$W_k$ = angular speed of the cage
$W_p$ = angular speed of the pin or bearing shaft
$W_b$ = angular speed of the sleeve or bearing bush
$R$  = inner radius of the sleeve or bearing bush
$r$  = radius of the balls
$V_k$ = axial speed of the cage
$V_p$ = axial speed of the pin or bearing shaft
$V_b$ = axial speed of the sleeve or bearing bush.

3. A method as claimed in Claim 1 or 2, characterized in that in order to obtain a herring-bone groove pattern, the directions of the relative rotational movements between the pin or bearing shaft and the cage between the cage and the bearing bush or sleeve and between the pin or bearing shaft and the bearing bush or sleeve are all reversed after displacement of the pin or sleeve and the cage or bearing bush or shaft over given distances in the axial direction.

4. A method as claimed in Claim 1, 2 or 3, characterized in that the diameter of the pin or sleeve is varied, so that grooves of varying depth are obtained.

5. A method as claimed in Claim 1, 2, 3 or 4, characterized in that the cage is provided with a plurality of rings of holes, the balls in each ring having a slightly larger diameter than the balls in the preceding ring with respect to the relative movement between the balls and the bearing bush or shaft in the axial direction.

6. A method as claimed in Claim 1, 2, 3 or 4, characterized in that a plurality of ring of holes are provided in the cage, the pin comprising sections which successively exhibit a larger diameter.

7. A method as claimed in Claim 1, 2, 3, 4, 5 or 6, characterized in that grooves of varying pitch are made by variation of the speed of the relative axial movement between the cage and the bearing bush or shaft with respect to the speed of the relative rotational movement therebetween.

8. A device for performing the method as claimed in one or more of the Claims 1 to 7, characterized in that the device comprises a hard pin or sleeve concentrically around which or in which there is provided a cage which comprises one or more rings of holes which are symmetrically distributed around the centre line and which accomodate hard balls having a diameter which is larger than the wall thickness of the cage, means being provided for imparting a relative simultaneous axial and rotational movement between the pin or bearing shaft and the cage on the one hand and the bearing bush or sleeve on the other hand.

9. A device as claimed in Claim 8, characterized in that the pin or the sleeve comprises parts of different diameter.

10. A device as claimed in Claim 8 or 9, characterized in that the cage comprises a plurality of rings of holes accommodating balls of the same diameter.

11. A device as claimed in Claim 9, characterized in that the cage comprises a plurality of rings of holes, the balls in each ring having a larger diameter, than the balls in the preceding ring with respect to the relative movement between the balls and the bearing bush or shaft in the axial direction.

**Ansprüche**

1. Verfahren zum Herstellen eines hydrodynamischen Rillenlagers mit einer Achse und einer Büchse, von denen wenigstens eine der zusammenarbeitenden Oberflächen mit mindestens einem Muster untiefer Schmiermittelpumprillen versehen ist, dadurch gekennzeichnet, dass die Lagerbüchse konzentrisch um einen Stift aus härterem Werkstoff als dem der Büchse angeordnet ist oder dass die Lagerachse konzentrisch in einer Büchse aus härterem Werkstoff als der der Achse angeordnet ist und in einem ringförmigen Spalt zwischen dem Stift oder der Büchse und der Lagerbüchse oder Lagerachse ein Käfig angeordnet ist mit wenigstens einem Kranz von Löchern, die um die Mittellinie symmetrisch verteilt sind und in denen sich Kugeln befinden, die einen Durchmesser haben, der grösser ist als die Breite des ringförmigen Spaltes, wonach relativ gleichzeitige Axial- und Drehbewegungen zwischen dem Stift oder der Lagerachse und dem Käfig, zwischen dem Käfig und der Lagerbüchse oder Büchse und zwischen dem Stift oder Lagerachse und der Lagerbüchse oder Büchse mit derartigen relativen Geschwindigkeiten durchgeführt werden, dass die Kugeln zwischen dem Stift oder der Büchse und der Lagerbüchse oder der Lagerachse eine rollende Bewegung erfahren.

2. Verfahren nach Anspruch 1, dadurch gekennzeichnet, dass die Drehgeschwindigkeiten des Stiftes oder der Lagerachse, der Büchse oder der Lagerbüchse und dem Käfig der nachfolgenden Gleichnung entsprechen :

$$W_k = \frac{W_p(R - 2\,r) + W_b\,R}{2(R - r)}$$

wobei die axialen Geschwindigkeiten des Käfigs, des Stiftes oder der Lagerachse und der Büchse oder der Lagerbüchse der nachfolgenden Gleichung entsprechen :

$$V_k = 1/2(V_p + V_b)$$

wobei :
$W_k$ = Winkelgeschwindigkeit des Käfigs
$W_p$ = Winkelgeschwindigkeit des Stiftes oder der Lagerachse
$W_b$ = Winkelgeschwindigkeit der Büchse oder der Lagerbüchse
$R$ = Innenradius der Büchse oder der Lagerbüchse
$r$ = Radius der Kugeln
$V_k$ = axiale Geschwindigkeit des Käfigs
$V_p$ = axiale Geschwindigkeit des Stiftes der Lagerachse
$V_b$ = axiale Geschwindigkeit der Büchse oder der Lagerbüchse ist.

3. Verfahren nach Anspruch 1 oder 2, dadurch gekennzeichnet, dass zum Erhalten eines Fischgratrillenmusters die Richtung der relativen Drehbewegungen zwischen dem Stift oder der Lagerachse und dem Käfig, zwischen dem Käfig und der Lagerbüchse oder Büchse und zwischen dem Stift oder der Lagerachse und der Lagerbüchse oder der Büchse nach Verschiebung des Stiftes oder der Büchse und des Käfigs oder der Lagerbüchse oder der Achse über gewisse Abstände in axialer Richtung umgekehrt wird.

4. Verfahren nach Anspruch 1, 2 oder 3, dadurch gekennzeichnet, dass der Durchmesser des Stiftes bzw. der Büchse geändert wird, so dass Rillen veränderlicher Tiefe erhalten werden.

5. Verfahren nach Anspruch 1, 2, 3 oder 4, dadurch gekennzeichnet, dass der Käfig mit einer Vielzahl von Kränzen von Löchern versehen ist, wobei die Kugeln in jedem Kranz einen etwas grösseren Durchmesser haben als die Kugeln im vorhergehenden Kranz in bezug auf die relative Bewegung zwischen den Kugeln und der Lagerbüchse bzw. Lagerachse in der axialen Richtung.

6. Verfahren nach Anspruch 1, 2, 3 oder 4, dadurch gekennzeichnet, dass in dem Käfig eine Vielzahl von Löcherkränzen vorgesehen ist, wobei der Stift mit Teilen versehen ist, die aufeinanderfolgend einen grösseren Durchmesser aufweisen.

7. Verfahren nach Anspruch 1, 2, 3, 4, 5 oder 6, dadurch gekennzeichnet, dass durch Aenderung der Geschwindigkeit der relativen axialen Bewegung zwischen dem Käfig und der Lagerbüchse bzw. Lagerachse in bezug auf die Geschwindigkeit der relativen Drehbewegung zwischen denselben, Rillen mit veränderlicher Steigung erhalten werden.

8. Vorrichtung zum Durchführen des Verfahrens nach einem oder mehreren der Ansprüche 1 bis 7, dadurch gekennzeichnet, dass die Vorrichtung einen harten Stift bzw. eine harte Büchse enthält und den bzw. in die konzentrisch ein Käfig aufgenommen ist, der einen oder mehrere Kränze von Löchern aufweist, die um die Mittellinie symmetrisch verteilt sind und die mit harten Kugeln zusammenarbeiten, die einen Durchmesser haben, der grösser ist als die Wandstärke des Käfigs, wobei Mittel vorgesehen sind zum Erteilen einer relativen gleichzeitigen Axial- und Drehbewegung zwischen dem Stift bzw. der Lagerachse und dem Käfig einerseits und der Lagerbüchse bzw. Büchse andererseits.

9. Vorrichtung nach Anspruch 8, dadurch gekennzeichnet, dass der Stift oder die Büchse Teile unterschiedlichen Durchmessers aufweisen.

10. Vorrichtung nach Anspruch 8 oder 9, dadurch gekennzeichnet, dass der Käfig eine Vielzahl von Kränzen von Löchern aufweist, die mit Kugeln gleichen Durchmessers zusammenarbeiten.

11. Vorrichtung nach Anspruch 9, dadurch gekennzeichnet, dass der Käfig eine Vielzahl von Kränzen von Löchern aufweist, wobei die Kugeln in jedem Kranz einen grösseren Durchmesser haben als die Kugeln in dem vorhergehenden Kranz in bezug auf die relative Bewegung zwischen den Kugeln und der Lagerbüchse bzw. Achse in der axialen Richtung.

## Revendications

1. Procédé pour la réalisation d'un palier à cannelure hydrodynamique comportant un arbre et un coussinet dont au moins l'une des faces coopérantes est munie d'une configuration de cannelures de pompage de lubrifiant peu profondes, caractérisé en ce que le coussinet est positionné concentriquement autour d'une broche en un matériau plus dur que celui du coussinet, ou l'arbre est positionné concentriquement dans une douille en un matériau plus dur que celui de l'arbre, et, dans un espace annulaire compris entre la broche ou la douille et, respectivement, le coussinet ou l'arbre, est prévue une cage présentant au moins une couronne de trous répartis symétriquement autour de l'axe géométrique et contenant des boulets, dont le diamètre est supérieur à la largeur de l'espace annulaire, après quoi des mouvements relatifs simultanément axiaux et rotatifs s'effectuent entre la broche ou l'arbre et la cage, entre la cage et le coussinet ou la douille et entre la broche ou l'arbre et le coussinet ou la douille, de façon que les boulets subissent un roulement entre la broche et la douille et, respectivement, le coussinet ou l'arbre.

2. Procédé selon la revendication 1, caractérisé en ce que la vitesse de rotation de la broche ou du coussinet, la douille ou le coussinet et la cage répondent à :

$$W_k = \frac{W_p(R - 2r) + W_b R}{2(R - r)}$$

et les vitesses de translation de la cage, de la broche ou de l'arbre et de la douille ou du coussinet répondent à :

$$V_k = 1/2(V_p + V_b)$$

formule dans laquelle :
$W_k$ = vitesse angulaire de la cage
$W_p$ = vitesse angulaire de la broche ou de l'arbre
$W_b$ = vitesse angulaire de la douille ou du coussinet
$R$ = rayon intérieur de la douille ou du coussinet
$r$ = rayon des boulets
$V_k$ = vitesse de translation de la cage
$V_p$ = vitesse de translation de la broche ou du coussinet
$V_b$ = vitesse de translation de la douille ou du coussinet.

3. Procédé selon l'une des revendications 1 ou 2, caractérisé en ce que pour obtenir une configuration de cannelures en arête de poisson dans le coussinet ou l'arbre du palier, les directions des mouvements rotatifs relatifs entre la broche ou l'arbre et la cage, entre la cage et le coussinet ou la douille, et entre la broche ou l'arbre et le coussinet ou la douille sont inversées, après déplacement de la broche ou de la douille et la cage ou le coussinet ou l'arbre sur une distance déterminée.

4. Procédé selon l'une des revendications 1, 2 ou 3, caractérisé en ce que le diamètre de la broche ou de la douille est modifié de façon à obtenir des cannelures de profondeur variable.

5. Procédé selon l'une des revendications 1, 2, 3 ou 4, caractérisé en ce que la cage est munie d'une pluralité de couronne de trous et les boulets de chaque couronne présentent un diamètre légèrement supérieur à celui des boulets dans la couronne précédente, vu dans la direction axiale du mouvement relatif entre les boulets et le coussinet ou l'arbre.

6. Procédé selon l'une des revendications 1, 2, 3 ou 4, caractérisé en ce que plusieurs couronnes de trous sont prévues dans la cage, et la broche est munie de parties présentant successivement des diamètres plus grands.

7. Procédé selon l'une des revendications 1, 2, 3, 4, 5 ou 6, caractérisé en ce que des cannelures de pas variable sont réalisées par variation de la vitesse du mouvement axial relatif entre la cage et le coussinet ou l'arbre par rapport à la vitesse de rotation relative entre ceux-ci.

8. Dispositif permettant la mise en œuvre du procédé selon l'une des revendications 1 à 7, caractérisé en ce que le dispositif comporte une broche ou douille dure, autour de laquelle ou dans laquelle est disposée une cage munie d'au moins une couronne de trous répartis symétriquement autour de l'axe géométrique et contenant des boulets durs, dont le diamètre est supérieur à l'épaisseur des parois de la cage, des moyens étant prévus pour assurer des mouvements axiaux et rotatifs simultanés relatifs entre la broche ou l'axe et la cage d'une part et le coussinet ou la douille d'autre part.

9. Dispositif selon la revendication 8, caractérisé en ce que la broche ou la douille comporte des parties de diamètres différents.

10. Dispositif selon l'une des revendications 8 ou 9, caractérisé en ce que la cage comporte plusieurs couronnes de trous contenant des boulets de même diamètre.

11. Dispositif selon la revendication 9, caractérisé en ce que la cage comporte plusieurs couronnes de trous, les boulets dans chaque couronne présentant un plus grand diamètre que les boulets de la couronne précédante par rapport au mouvement relatif entre les boulets et le coussinet ou l'arbre dans la direction axiale.

Fig.1

Fig.2

Fig.3

Fig.4

Fig.5